# EUROPEAN PATENT APPLICATION

(11) **EP 4 756 614 A1**
(43) Date of publication of application: **10.06.2026**
(21) Application number: 25211680.1
(22) Date of filing: 28.10.2025
(51) Int. Cl.: G06F 9/48, G06F 9/50

(54) **SOFTWARE FUNCTION SCHEDULING SERVICE**

(30) Priority: 09.12.2024 US 202418974536
(71) Applicant: The Boeing Company, Arlington, VA 22202 (US)
(72) Inventor: HANSEN, Joseph Michael, Arlington, 22202 (US); DUREL, Marine, Arlington, 22202 (US)
(74) Representative: Bugnion S.p.A. - US1

(57) **Abstract**

A method (200) for software function scheduling includes, at a computing system (100), executing a scheduling service (112) to coordinate function execution for a plurality of software functions (108) of the computing system (100). The scheduling service (112) receives registration information (302) for a software function (108) of the plurality of software functions, the registration information (302) including a periodic execution rate (308) for the software function (108). The software function (108) is assigned to a rate group (312) that includes one or more other software functions (108) each having the periodic execution rate (308), wherein each software function (108) in the rate group (312) is executed in a group-specific processing thread (310). The software function (304) is executed at the periodic execution rate (308) using the group-specific processing thread (310).

## Description

### FIELD

The invention generally relates to software function scheduling, and more particularly, a scheduling service that assigns software functions to processing threads based on associated periodic execution rates.

### BACKGROUND

Computing systems, such as mobile devices, personal computers, servers, and distributed cloud systems, increasingly operate with numerous software applications and processes that are executed simultaneously or sequentially. Schedulers are used to assign different software functions to different processing threads for execution.

### SUMMARY

This summary is not an extensive overview of the specification. It is intended to neither identify key or critical elements of the specification nor delineate any scope particular to embodiments of the specification, or any scope of the claims. Its sole purpose is to present some concepts of the specification in a simplified form as a prelude to the more detailed description that is presented in this disclosure.

A method for software function scheduling includes, at a computing system, executing a scheduling service to coordinate function execution for a plurality of software functions of the computing system. The scheduling service receives registration information for a software function of the plurality of software functions, the registration information including a periodic execution rate for the software function. The software function is assigned to a rate group that includes one or more other software functions each having the periodic execution rate, wherein each software function in the rate group is executed in a group-specific processing thread. The software function is executed at the periodic execution rate using the group-specific processing thread.

The features, functions, and advantages that have been discussed can be achieved independently in various embodiments or can be combined in yet other embodiments, further details of which can be seen with reference to the following description and drawings.

### BRIEF DESCRIPTION OF THE DRAWINGS

FIG. 1 schematically depicts an example computing system including a scheduling service for assigning software functions to processing threads.
FIG. 2 illustrates an example method for software function scheduling.
FIGS. 3A-3C schematically illustrate registration of software functions with a scheduling service.
FIGS. 4A-4C schematically illustrate execution of software functions in different rate groups during a plurality of processing cycles.
FIG. 5 schematically shows an example computing system.

### DETAILED DESCRIPTION

As computer technology has developed, computing systems are expected to execute and simultaneously maintain increasingly large numbers of different software functions, which have themselves also become more complicated and resource intensive. As such, it becomes increasingly difficult for the computing system to coordinate and schedule the execution of the various software functions it is tasked with running. Some approaches to execution scheduling involve creating new processing threads for each software function, and then relying on the computer's operating system to schedule function execution. However, this can result in a relatively large number of threads, which are difficult to synchronize and resource intensive to maintain. This is exacerbated when handling software functions with distinct execution rates and priority levels, and when implemented in systems that operate under resource constraints or have strict timing requirements. Furthermore, such approaches also often require significant amounts of customization to interface with the computer's operating system, making them complicated to develop and maintain.

Accordingly, the present disclosure is directed to techniques for scheduling the execution of software functions. More particularly, the present disclosure describes a scheduling service executed by a computing system and used to coordinate function execution for a plurality of software functions of the computing system. For each software function, the scheduling service receives a periodic execution rate at which the software function is to be executed. The scheduling service then assigns the software functions to different rate groups, where the software functions in a given rate group each have the same periodic execution rate. Furthermore, each of the software functions in the same rate group are executed in the same processing thread. In other words, each rate group is executed in its own group-specific processing thread, which is used to handle each of the software functions of the rate group, resulting in fewer total processing threads overall.

In this manner, the techniques discussed herein beneficially improve the efficiency of software function execution by reducing the total number of threads used. This can facilitate improved software integration and debugging, and conserve computational resources of the computing system. Furthermore, this approach may provide software developers with more control over how and when their functions are executed, rather than relying on the computer's operating system. In some scenarios, the scheduling service described herein may be portable to a wide variety of different types of computing systems, with different hardware and software configurations, which can beneficially facilitate faster and simpler implementation of efficient software function scheduling. Furthermore, the scheduling service may in some cases be used to capture and report performance-related metadata during execution of the software functions, which can beneficially be used to characterize the execution performance of the software functions and the overall computing system.

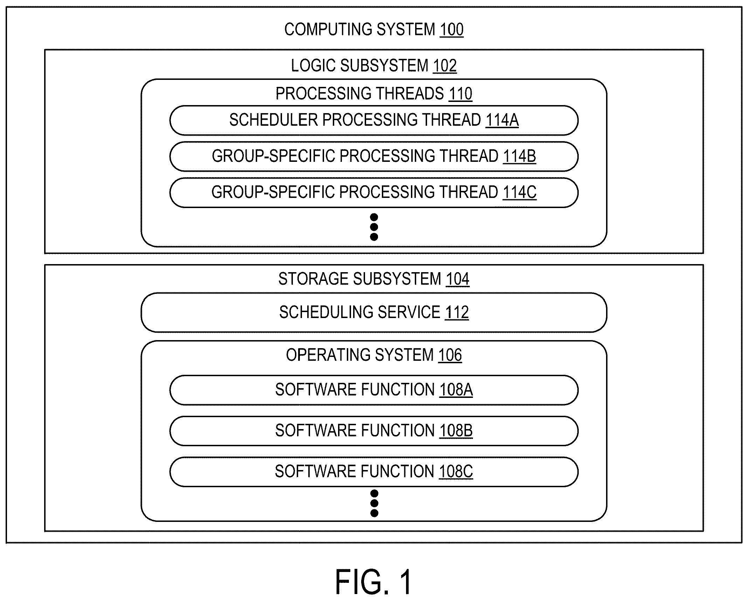

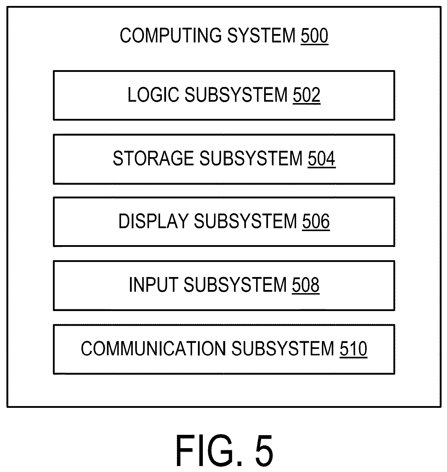

FIG. 1 schematically illustrates an example computing system 100, which may be used to implement the techniques described herein. As discussed above, the software scheduling service described in the present disclosure may be implemented on any of a wide variety of different computing systems, having various suitable hardware and/or software configurations. As such, it will be understood that computing system 100 may have any suitable capabilities, hardware configuration, and form factor. As non-limiting examples, the computing system may take the form of a desktop computer, server computer, laptop computer, mobile computing device (e.g., smartphone, tablet), wearable computing device (e.g., smart watch), embedded computing system, distributed computing system, etc. In some examples, computing system 100 may be implemented as computing system 500 described below with respect to FIG. 5.

Computing system 100 includes a logic subsystem 102 and a storage subsystem 104. The logic subsystem may take the form of any suitable computer processing hardware. For instance, the logic subsystem may be implemented as a central processing unit (CPU), graphics processing unit (GPU), system-on-chip (SoC), etc. Similarly, the storage subsystem may include any suitable volatile, non-volatile, integrated, and/or removable data storage hardware. In some examples, logic subsystem 102 and storage subsystem 104 may be implemented as logic subsystem 502 and storage subsystem 504 described below with respect to FIG. 5.

The logic subsystem 102 and storage subsystem 104 are together used to implement operating system 106. The operating system 106 may take any suitable form and have any suitable capabilities. In general, an operating system is a software platform that manages computer hardware and software resources of the computing system, providing a stable environment for execution of software functions. It handles tasks such as memory management, process scheduling, input/output operations, and/or security, allowing users and applications to interact with the system efficiently. Some operating systems are sometimes referred to as "priority-preemptive" operating systems. A priority-preemptive operating system is one that assigns priority levels to processes and allows the operating system to interrupt (preempt) a running process in favor of a higher-priority one. It will be understood that the scheduling service described herein may be used with any suitable operating system - e.g., any of a variety of suitable priority-preemptive operating systems.

In the example of FIG. 1, the operating system 106 is used to manage and coordinate a plurality of different software functions of the computing system. In FIG. 1, three different software functions are shown, including software functions 108A, 108B, and 108C. Different software functions may be executed at different rates and with different priority levels. In general, software functions may have any suitable purpose and may perform any of a wide variety of different computational tasks - e.g., generating, processing, and/or outputting various types of computer data.

In FIG. 1, the logic subsystem 102 maintains a plurality of processing threads 110, and the various software functions are allocated between the processing threads 110. It will be understood that a computing system may create and maintain any suitable number of different processing threads, which can be used to execute software functions of the computing system. A processing thread, often referred to as a "thread" in computing, represents a sequence of executable instructions within a program that the processor can manage and execute independently. Threads are a fundamental unit of execution in modern computing systems, designed to enhance parallelism by allowing multiple threads to run concurrently within a single processor or across multiple processor cores. In the context of a multi-threaded application, each thread operates as a separate pathway for execution, capable of performing a distinct task or function independently or in coordination with other threads.

In the case of computing system 100, where multiple software functions 108A-C are executed concurrently, a scheduling service 112 allocates these functions between the different processing threads 110. As will be described in more detail below, the scheduling service 112 assigns the software functions to different rate groups, corresponding to different periodic execution rates of the software functions. These different groups of functions are then executed in separate group-specific processing threads. In FIG. 1, the processing threads 110 include group-specific processing threads 114B and 114C, which are used to execute software functions belonging to different rate groups.

In some examples, the scheduling service itself is executed in its own processing thread. For instance, in FIG. 1, the processing threads 110 includes a scheduler processing thread 114A, which is used to execute the underlying software functions implementing the scheduling service 112. In other words, the scheduling service 112 is executed in a scheduler processing thread 114A that is separate from the group-specific processing threads 114B, 114C to which the various other software functions are assigned. In some examples, the scheduler processing thread 114A may be the highest-priority processing thread of the computing system 100, such that execution of the scheduling service 112 is prioritized over all of the other software functions.

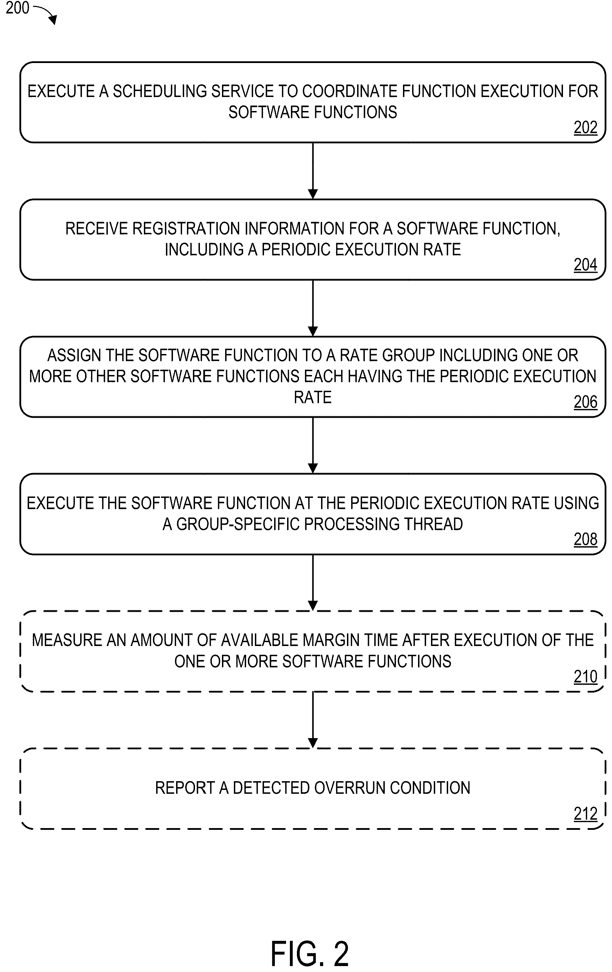

FIG. 2 illustrates an example method 200 for software function scheduling via a scheduling service. For instance, method 200 may be performed by computing system 100, which thereby uses scheduling service 112 in assigning the software functions 108A-108C to different processing threads 110. Steps of method 200 may be initiated, terminated, and/or repeated at any suitable time and in response to any suitable condition. Furthermore, method 200 may be implemented by any suitable computing system of one or more computing devices. Any computing device performing steps of method 200 may have any suitable capabilities, hardware configuration, and form factor. In some examples, method 200 may be implemented by computing system 500 described below with respect to FIG. 5.

At 202, method 200 includes, at a computing system, executing a scheduling service to coordinate function execution for a plurality of software functions of the computing system. For instance, returning to the example of FIG. 1, computing system 100 executes scheduling service 112, which is used to assign the different software functions 108A-108C to different processing threads 110. As discussed above, in some examples, the scheduling service 112 is abstracted away from the underlying operating system. In other words, the scheduling service 112 provides a higher-level, uniform interface for managing tasks or functions, allowing developers to focus on logic rather than OS-specific intricacies. This beneficially enables a high degree of portability to other computing systems having different hardware and/or software configurations, reducing the amount of OS-level customization required in implementing software function execution scheduling.

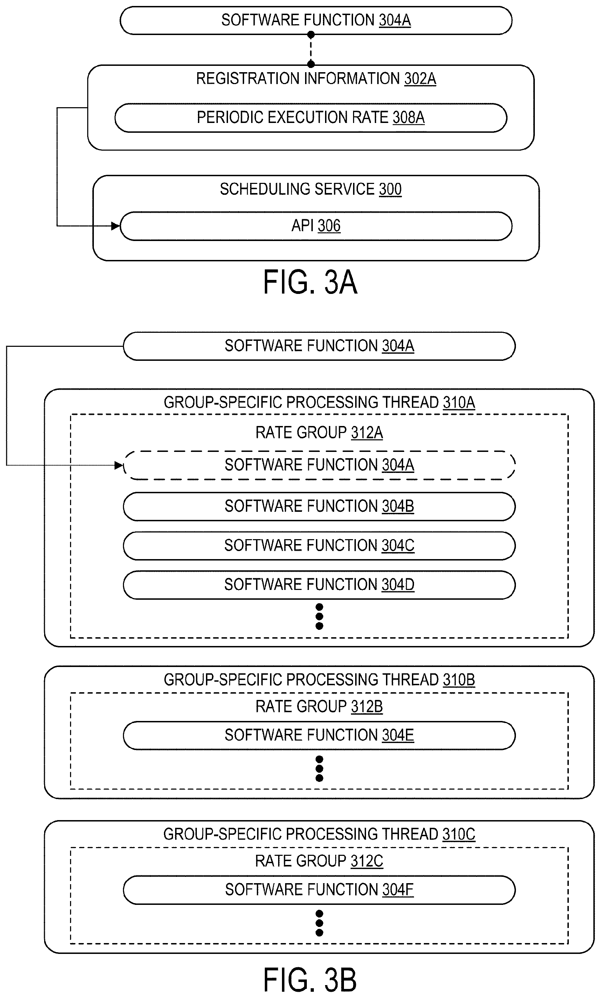

Continuing with method 200, at 204, the method includes receiving, at the scheduling service, registration information for a software function of the plurality of software functions. The registration information includes a periodic execution rate for the software function, indicating the rate at which the software function is to be executed. Note that execution of the software function may not always satisfy the periodic execution rate - e.g., if the load on the system is high, then the computing system may not always be able to maintain the intended periodic execution rate for each software function. As will be described in more detail below, the scheduling service 112 described herein may enable detection and reporting of such overrun conditions, when execution of a software function does not satisfy its associated periodic execution rate. This can provide useful feedback to software processes and/or human users, who can tune system performance to improve efficiency and alleviate the overrun condition. FIG. 3A schematically illustrates an example scheduling service 300, which receives registration information 302A corresponding to a software function 304A. In this example, the registration information 302A for the software function 304A is received via an application programming interface (API) 306 of the scheduling service. The registration information 302A includes a periodic execution rate 308A, indicating the rate at which software function 304A is to be executed. It will be understood that on other examples, the registration information 302A may include any suitable data in addition to, or instead of, a periodic execution rate. For instance, as will be described below, the registration information 302A may include an offsetting parameter and/or a sub-banding parameter, providing more information regarding how the software function 304A is to be executed.

The specific manner in which the registration information 302A is received, and the software function 304A is enrolled with the scheduling service 112, may vary depending on the implementation - e.g., the specific underlying programming language(s) being used. In some examples, the software function 304A is implemented using an object-oriented programming language. In such cases, the software function 304A may be encapsulated in an object, and the periodic execution rate may be defined via attributes of the object. The scheduling service 112 may then call the object to cause execution of the software function 304A. In other examples, the software function 304A may be implemented using a non-object-oriented programming language. In such cases, the software function 304A may be registered with the scheduling service 112 by providing a pointer to the scheduling service 112, and/or in another suitable way depending on the specific programming language used.

It will be understood that the above process may be repeated for any suitable number of different software functions of the computing system. For instance, the scheduling service 112 may be used to schedule the execution of dozens, hundreds, thousands, or more different unique software functions. Each of these software functions may be associated with a periodic execution rate at which the software function is to be executed, reported via the registration information provided at enrollment. In other words, in addition to the software function 304A shown in FIG. 3A, the scheduling service 112 may receive a second set of registration information for a second software function, specifying a second periodic execution rate for the second software function. Returning briefly to FIG. 2, at 206, method 200 includes, at the scheduling service, assigning the software function to a rate group that includes one or more other software functions each having the same periodic execution rate. Furthermore, each software function in the same rate group is executed in the same group-specific processing thread. This is schematically illustrated with respect to FIG. 3B, again showing software function 304A. In this example, the software function 304A is assigned to a group-specific processing thread 310A for execution, which includes a number of other software functions 304B, 304C, and 304D each sharing the same periodic execution rate. As such, each of these software functions 304B, 304C, and 304D are included in the same rate group 312A, which is executed in the group-specific processing thread 310A.

In this example, the system additionally maintains a second group-specific processing thread 310B, and a third group-specific processing thread 310C. Each of these include different respective rate groups 312B and 312C of software functions, including software functions 304E and 304F. As discussed above, the software functions assigned to different rate groups may have different periodic execution rates. For instance, the periodic execution rate of software functions 304A, 304B, 304C, and 304D may be different from the periodic execution rates of software functions 304E and 304F, and thus these software functions are assigned to different rate groups and executed in different group-specific processing threads. This approach, in which two or more different software functions may be assigned to the same rate group based on a shared periodic execution rate, results in an overall reduction of the number of processing threads that are generated, which beneficially conserves computational resources and simplifies the overall software configuration.

In some examples, there may be a correspondence between different rate groups, and different execution priority levels. As discussed above, the scheduling service 112 itself may in some cases be executed in a highest-priority processing thread of the computing system 100. The next highest priority processing thread may be used for a rate group with the highest periodic execution rate - e.g., such that the software functions with the tightest timing requirements are executed earliest in each execution cycle. Rate groups with progressively lower periodic execution rates may have progressively lower priority levels, such that the software functions having the lowest periodic rates are prioritized lower than software functions having higher periodic execution rates. In other examples, however, priority for different software functions may be defined in other suitable ways - e.g., based on explicit priority parameters included in the initial registration information.

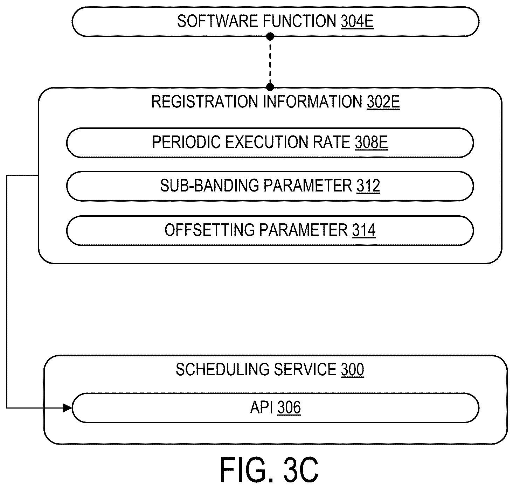

FIG. 3C schematically illustrates the enrollment of a second software function 304E with scheduling service 300. As shown, via the API 306, the scheduling service 300 receives a second set of registration information 302E, corresponding to the second software function 304E. The second set of registration 302E information includes a second periodic execution rate 308E, indicating the rate at which the second software function 304E is to be executed. In this example, the second periodic execution rate 308E differs from the first periodic execution rate, and thus the second software function 304E is assigned to a second rate group executed in a second group-specific processing thread (e.g., rate group 312B executed in group-specific processing thread 310B, as is shown in FIG. 3B).

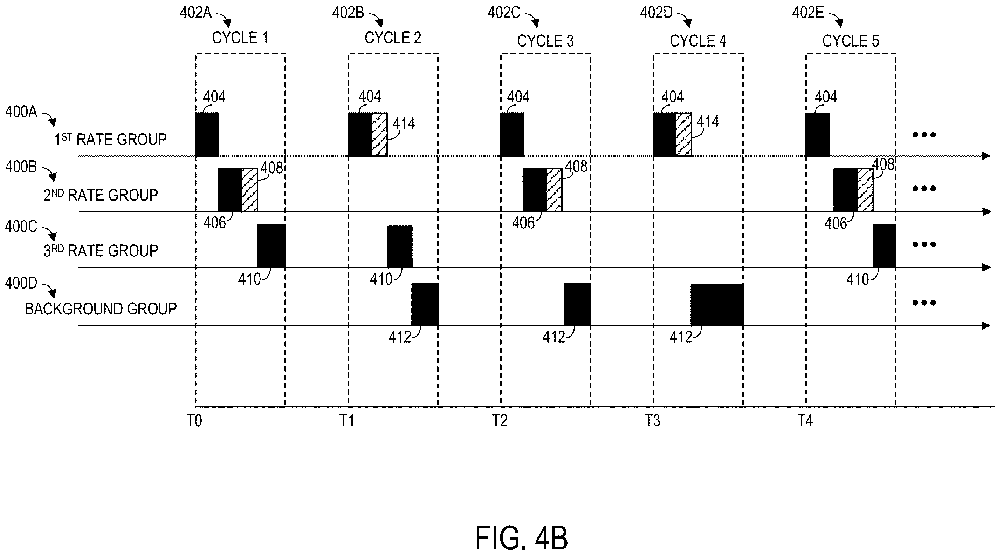

In the example of FIG. 3C, the registration information 302E includes more data in addition to the periodic execution rate 308E. Specifically, in this example, the software function 304E is associated with a sub-banding parameter 312, and an offsetting parameter 314. The sub-banding parameter 312 indicates that execution of the software function 304E should periodically skip one or more execution cycles. As a result, the software function 304E is executed at an effective execution rate that is lower than the periodic execution rate corresponding to the rate group to which it is assigned. The offsetting parameter 314 indicates that execution of the software function 304E should be delayed by one or more cycles relative to other software functions that do not use offsetting. Examples of both sub-banding and offsetting will be illustrated and described with respect to FIG. 4B.

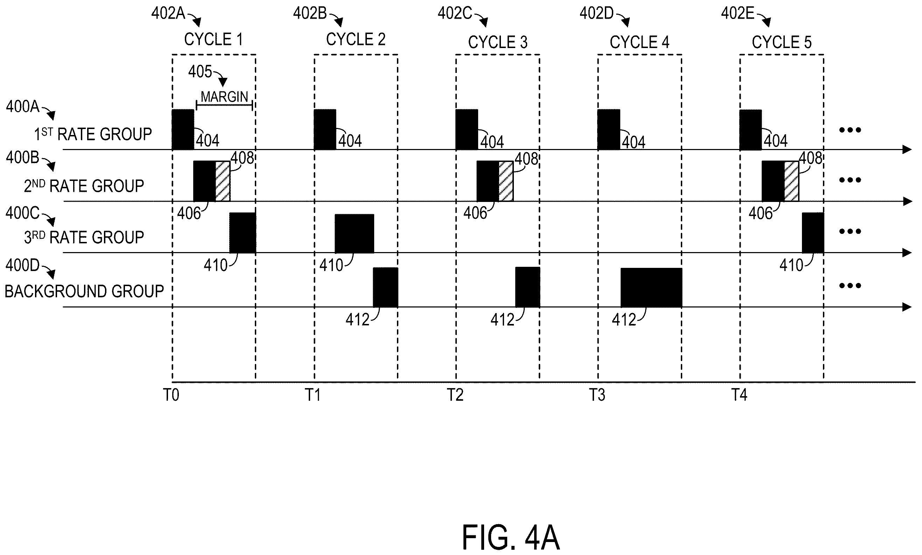

Returning briefly to FIG. 2, at 208, method 200 includes executing the software function at the periodic execution rate using the group-specific processing thread. Software function execution is schematically illustrated with respect to FIG. 4A. This depicts a plurality of different software rate groups, including a 1^{st} rate group 400A, a 2^{nd} rate group 400B, and a 3^{rd} rate group 400C. In this example, the system additionally maintains a background rate group 400D for execution of background tasks. FIG. 4A represents execution of different software functions in the rate groups over a series of execution cycles, including cycles 402A-402E. It will be understood that execution cycles may have any suitable duration and may be separated by any suitable interval of time, depending on the implementation (e.g., the capabilities of the computer processor).

In this simplified example, a single software function 404 is executed in the 1^{st} rate group 400A. This rate group has the highest periodic execution rate, as software function 404 is intended to be executed in every cycle. As such, in this example, rate group 400A has a higher priority than other rate groups, such that execution of software function 404 occurs at the beginning of each execution cycle, before execution of the other software functions. By contrast, the 2^{nd} rate group 400B includes two software functions 406 and 408. These are two software functions having the same periodic execution rate (once every other cycle), and thus are both assigned to the same rate group and the same group-specific processing thread. Because they have a lower periodic execution rate than the 1^{st} rate group 400A, software functions 406 and 408 are executed with a lower priority than software function 404.

In this example, the 3^{rd} rate group 400C includes a single software function 410, which is supposed to be executed once every four cycles according to its periodic execution rate. Execution of software function 410 begins in the first cycle 402A, after execution of software functions 404, 406, and 408. However, in this case, there is not enough remaining time in the execution cycle to finish executing software function 410. As such, execution of the function is pre-empted until the next cycle 402B. After execution of software function 404 in cycle 402B, execution of software function 410 resumes and completes, prior to the end of the execution cycle. Because the periodic execution rate of software function 410 has now been satisfied, it does not execute again until cycle 402E.

In this example, the computing system additionally executes a background task 412 as part of a background execution group 400D. In this approach, background tasks such as task 412 need not include periodic execution rates. Rather, background tasks may be executed during any remaining time at the end of an execution cycle, after the execution of other, higher-priority software functions has finished. For instance, the background task 412 is not executed during cycle 402A, as there is no remaining time at the end of the execution cycle. Because cycle 402B does include remaining time, the system begins execution of background task 412 at the end of the execution cycle. The system continues executing the background task at the end of cycle 402C and completes execution of the background task 412 in cycle 402D.

FIG. 4B schematically depicts software function execution in another scenario, where sub-banding and offsetting are implemented. As discussed above, some software functions may include sub-banding and/or offsetting parameters in the registration information provided to the scheduling service. The sub-banding parameter indicates that execution of the software function should periodically skip one or more execution cycles, such that it executes at an effective rate that is lower than its periodic execution rate. This is demonstrated with respect to software function 414, which is included as part of the 1^{st} rate group 400A. Because it is included in the rate group associated with the highest periodic execution rate, software function 414 is executed with a higher priority than software functions in the lower rate groups. For instance, software function 414 is executed at the same effective rate as functions 406 and 408, but with a higher priority, as it is in a higher rate group. In other words, because sub-banding is implemented, execution of software function 414 skips every other execution cycle. As a result, the function is executed with an effective rate that is half as much as the periodic execution rate of its rate group. In this manner, the software function gains the benefit of a higher priority rate group, without actually being executed at the higher periodic rate associated with that rate group.

Software function 414 is also used to demonstrate offsetting. As discussed above, an offsetting parameter associated with a software function indicates that execution of the software function should be delayed by one or more execution cycles, relative to other software functions of the computing system. As shown, software function 414 does not execute during the first cycle 402A, but rather its execution is delayed until the second cycle 402B, due to an offsetting parameter associated with the software function.

It will be understood that this description of sub-banding and offsetting serves as a simplified example for the sake of explanation only. In general, each rate group may include any suitable number of different software functions, any or all of which may be associated with sub-banding and/or offsetting parameters. Furthermore, the sub-banding and offsetting parameters may specify any suitable relationship with respect to other software functions in the same rate group. For instance, a sub-banding parameter may specify that execution of a function should skip every other cycle, every two cycles, every three cycles, etc. Similarly, an offsetting parameter may indicate that execution of a software function should be delayed by one cycle, two cycles, ten cycles, etc.

Returning briefly to FIG. 2, at 210, method 200 optionally includes measuring, for each of a plurality of cycles, an amount of available margin time remaining after execution of the software functions of the rate group, prior to the start of the next cycle. With respect to FIG. 4A, the computing system measures the amount of margin time 405 remaining in the first cycle 402A after execution of software function 404. In other words, this represents the amount of the execution cycle that remains after execution of all the software functions of the 1^{st} rate group. It will be understood that margins may also be calculated for each other rate group and each other cycle. This can provide useful feedback relating to the amount of time remaining in each execution cycle during normal computer performance, and can be used to detect overrun conditions, in which there is not enough time in the execution cycles to satisfy a software function's periodic execution rate.

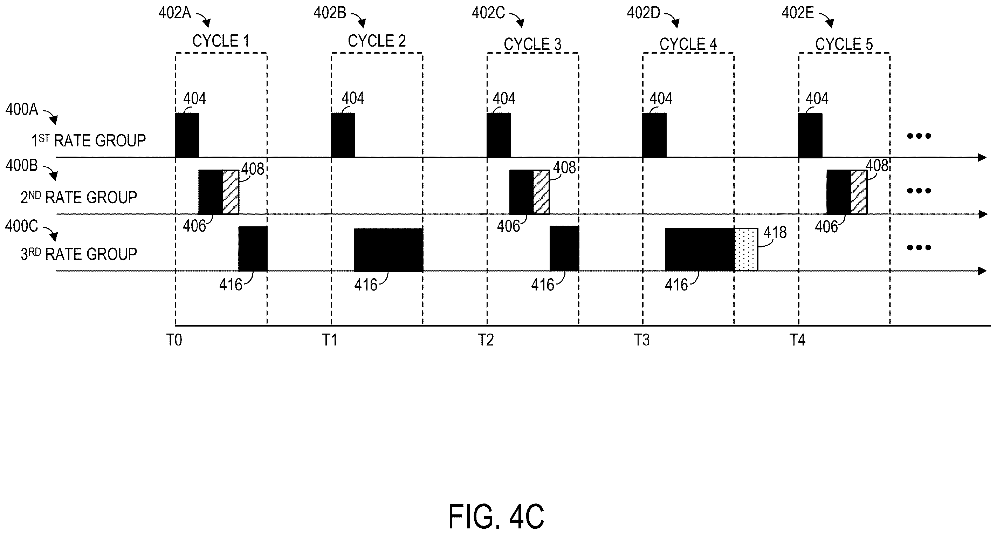

Detection of an overrun condition is schematically illustrated with respect to FIG. 4C. This again schematically represents execution of several software functions assigned to three different rate groups 400A, 400B, and 400C, over a series of execution cycles 402A-E. Software function 404 is again executed in the 1^{st} rate group, while software functions 406 and 408 are executed in the 2^{nd} rate group. However, in this example, a new software function 416 is executed in the 3^{rd} rate group 400C. This function has a periodic execution rate of once every four cycles. Execution of function 416 begins in the first cycle 402A, and continues during cycles 402B, 402C, and 402D. However, in this example, there was not sufficient time in the first four execution cycles to complete execution of software function 416. As such, the software function does not satisfy its periodic execution rate, causing an overrun. In the example of FIG. 4C, the overrun is represented as a period of time 418 that would have been required to complete execution of function 416, had there been sufficient time remaining in the execution cycle. Returning briefly to FIG. 2, at 212, method 200 includes reporting a detected overrun condition. Such information may be reported in any suitable way, such as via a message that is displayed on a computer display of the computing system, transmitted to another computing device, stored in a data file, reported to another software application of the computing system, etc. Any suitable criteria may be used to determine when an overrun condition has been satisfied. For instance, in various examples, an overrun condition may be detected if a given software function does not satisfy its periodic execution rate a single time, or several times in a row, or a threshold number of times total, or if the software function has sufficiently high priority, etc.

In any case, detecting and reporting overrun conditions in this manner can beneficially enable software functions and/or human users to improve the performance of the computing system. For instance, in response to a detected overrun condition, the periodic execution rate of a given software function may be decreased, or the priority of the software function may be increased, to reduce the incidence of overrun conditions in the future. Additionally, or alternatively, the system may reset, execution of the software function may be terminated, an error message may be output, and/or any other suitable remedy may be taken.

The methods and processes described herein may be tied to a computing system of one or more computing devices. In particular, such methods and processes may be implemented as an executable computer-application program, a network-accessible computing service, an application-programming interface (API), a library, or a combination of the above and/or other compute resources.

FIG. 5 schematically shows a simplified representation of a computing system 500 configured to provide any to all of the compute functionality described herein. Computing system 500 may take the form of one or more network-accessible devices, personal computers, server computers, mobile computing devices, and/or other computing devices.

Computing system 500 includes a logic subsystem 502 and a storage subsystem 504. Computing system 500 may optionally include a display subsystem 506, input subsystem 508, communication subsystem 510, and/or other subsystems not shown in FIG. 5.

Logic subsystem 502 includes one or more physical devices configured to execute instructions. For example, the logic subsystem 502 may be configured to execute instructions that are part of one or more applications, services, or other logical constructs. The logic subsystem 502 may include one or more hardware processors configured to execute software instructions. Additionally, or alternatively, the logic subsystem 502 may include one or more hardware or firmware devices configured to execute hardware or firmware instructions. Processors of the logic subsystem 502 may be single-core or multi-core, and the instructions executed thereon may be configured for sequential, parallel, and/or distributed processing. Individual components of the logic subsystem 502 optionally may be distributed among two or more separate devices, which may be remotely located and/or configured for coordinated processing. Aspects of the logic subsystem 502 may be virtualized and executed by remotely-accessible, networked computing devices configured in a cloud-computing configuration. Storage subsystem 504 includes one or more physical devices configured to temporarily and/or permanently hold computer information, such as data and instructions executable by the logic subsystem. When the storage subsystem 504 includes two or more devices, the devices may be collocated and/or remotely located. Storage subsystem 504 may include volatile, nonvolatile, dynamic, static, read/write, read-only, random-access, sequential-access, location-addressable, file-addressable, and/or content-addressable devices. Storage subsystem 504 may include removable and/or built-in devices. When the logic subsystem 502 executes instructions, the state of storage subsystem 504 may be transformed - e.g., to hold different data.

Aspects of logic subsystem 502 and storage subsystem 504 may be integrated together into one or more hardware-logic components. Such hardware-logic components may include program- and application-specific integrated circuits (PASIC / ASICs), program- and application-specific standard products (PSSP / ASSPs), system-on-a-chip (SOC), and complex programmable logic devices (CPLDs), for example.

The logic subsystem 502 and the storage subsystem 504 may cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine may be instantiated by a single computing device, or a machine may include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality may optionally be saved as one or more unexecuted modules on one or more suitable storage devices.

When included, display subsystem 506 may be used to present a visual representation of data held by storage subsystem 504. This visual representation may take the form of a graphical user interface (GUI). Display subsystem 506 may include one or more display devices utilizing virtually any type of technology. In some implementations, display subsystem 506 may include one or more virtual-, augmented-, or mixed reality displays.

When included, input subsystem 508 may comprise or interface with one or more input devices. An input device may include a sensor device or a user input device. Examples of user input devices include a keyboard, mouse, touch screen, or game controller. In some embodiments, the input subsystem 508 may comprise or interface with selected natural user input (NUI) componentry. Such componentry may be integrated or peripheral, and the transduction and/or processing of input actions may be handled on-or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 510 may be configured to communicatively couple computing system 500 with one or more other computing devices. Communication subsystem 510 may include wired and/or wireless communication devices compatible with one or more different communication protocols. The communication subsystem 510 may be configured for communication via personal-, local- and/or wide-area networks.

This disclosure is presented by way of example and with reference to the associated drawing figures. Components, process steps, and other elements that may be substantially the same in one or more of the figures are identified coordinately and are described with minimal repetition. It will be noted, however, that elements identified coordinately may also differ to some degree. It will be further noted that some figures may be schematic and not drawn to scale. The various drawing scales, aspect ratios, and numbers of components shown in the figures may be purposely distorted to make certain features or relationships easier to see.

Further, the disclosure comprises configurations according to the following examples. Example 1. A method for software function scheduling comprises: at a computing system, executing a scheduling service to coordinate function execution for a plurality of software functions of the computing system; receiving, at the scheduling service, registration information for a software function of the plurality of software functions, the registration information including a periodic execution rate for the software function; at the scheduling service, assigning the software function to a rate group that includes one or more other software functions each having the periodic execution rate, wherein each software function in the rate group is executed in a group-specific processing thread; and executing the software function at the periodic execution rate using the group-specific processing thread.

Example 2. The method of example 1, further comprising receiving second registration information for a second software function, the second registration information including a second periodic execution rate for the second software function, assigning the second software function to a second rate group executed in a second group-specific processing thread, and executing the second software function at the second periodic execution rate using the second group-specific processing thread.

Example 3. The method of example 1, wherein the rate group is one of a plurality of rate groups, each associated with different periodic execution rates, and wherein software functions included in rate groups associated with higher periodic execution rates are executed with a higher priority than software functions included in rate groups associated with lower periodic execution rates.

Example 4. The method of example 1, wherein a second software function in the rate group is associated with a sub-banding parameter, the sub-banding parameter indicating that execution of the second software function should periodically skip one or more cycles, such that the second software function is executed at an effective execution rate that is lower than the periodic execution rate of the rate group.

Example 5. The method of example 1, wherein a second software function in the rate group is associated with an offsetting parameter, the offsetting parameter indicating that execution of the second software function should be delayed by one or more cycles relative to the software function.

Example 6. The method of example 1, further comprising measuring, for each of a plurality of cycles, an amount of available margin time remaining after execution of each of the one or more software functions of the rate group, prior to a start of a next cycle of the plurality of cycles.

Example 7. The method of example 6, further comprising detecting an overrun condition, in which execution of the one or more software functions of the rate group is not completed prior to completion of a current cycle, and reporting the overrun condition.

Example 8. The method of example 1, wherein the scheduling service is executed in a scheduler processing thread that is separate from the group-specific processing thread. Example 9. The method of example 8, wherein the scheduler processing thread is a highest-priority processing thread of the computing system.

Example 10. The method of example 1, wherein the registration information for the software function is received via an application programming interface (API) of the scheduling service.

Example 11. The method of example 1, wherein the software function is implemented using an object-oriented programming language, such that the software function is encapsulated in an object, and wherein the periodic execution rate is defined via attributes of the object

Example 12. The method of example 1, wherein the software function is implemented using a non-object-based programming language, and wherein the software function is registered with the scheduling service by providing a pointer corresponding to the software function.

Example 13. A computing system comprises: a logic subsystem; and a storage subsystem holding instructions executable by the logic subsystem to: execute a scheduling service to coordinate function execution for a plurality of software functions of the computing system; receive, at the scheduling service, registration information for a software function of the plurality of software functions, the registration information including a periodic execution rate for the software function; at the scheduling service, assign the software function to a rate group that includes one or more other software functions each having the periodic execution rate, wherein each software function in the rate group is executed in a group-specific processing thread; and execute the software function at the periodic execution rate using the group-specific processing thread.

Example 14. The computing system of example 13, wherein the instructions are further executable to receive second registration information for a second software function, the second registration information including a second periodic execution rate, assign the second software function to a second rate group executed in a second group-specific processing thread, and execute the second software function at the second periodic execution rate using the second group-specific processing thread.

Example 15. The computing system of example 13, wherein the rate group is one of a plurality of rate groups, each associated with different periodic execution rates, and wherein software functions included in rate groups associated with higher periodic execution rates are executed with a higher priority than software functions included in rate groups associated with lower periodic execution rates.

Example 16. The computing system of example 13, wherein a second software function in the rate group is associated with a sub-banding parameter, the sub-banding parameter indicating that execution of the second software function should periodically skip one or more cycles, such that the second software function is executed at an effective execution rate that is lower than the periodic execution rate of the rate group. Example 17. The computing system of example 13, wherein a second software function in the rate group is associated with an offsetting parameter, the offsetting parameter indicating that execution of the second software function should be delayed by one or more cycles relative to the software function.

Example 18. The computing system of example 13, wherein the instructions are further executable to measure, for each of a plurality of cycles, an amount of available margin time remaining after execution of each of the one or more software functions of the rate group, prior to a start of a next cycle of the plurality of cycles.

Example 19. A method for software function scheduling comprises: at a computing system, executing a scheduling service to coordinate function execution for a plurality of software functions of the computing system, wherein the scheduling service is executed in a highest-priority processing thread of the computing system; receiving, at the scheduling service, registration information for a software function of the plurality of software functions, the registration information including a periodic execution rate for the software function, and a sub-banding parameter for the software function, the sub-banding parameter indicating that execution of the software function should periodically skip one or more cycles; at the scheduling service, assigning the software function to a rate group that includes one or more other software functions each having the periodic execution rate, wherein each software function in the rate group is executed in a group-specific processing thread; and executing the software function using the group-specific processing thread, wherein the software function is executed at an effective execution rate that is lower than the periodic execution rate of the rate group due to the sub-banding parameter.

Example 20. The method of example 19, further comprising receiving second registration information for a second software function, the second registration information including a second periodic execution rate for the second software function, assigning the second software function to a second rate group executed in a second group-specific processing thread, and executing the second software function at the second periodic execution rate using the second group-specific processing thread. It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed. The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computer-implemented method (200) for software function scheduling, the method (200) comprising:
at a computing system (100), executing a scheduling service (112; 300) to coordinate function execution for a plurality of software functions (108A, 108B, 108C; 304A, 304B, 304C, 304D, 304E, 304F; 404, 406, 408, 410) of the computing system (100);
receiving, at the scheduling service (112; 300), registration information (302A) for a software function (304A) of the plurality of software functions (108A, 108B, 108C; 304A, 304B, 304C, 304D, 304E, 304F; 404, 406, 408, 410), the registration information (302A) including a periodic execution rate (308A) for the software function (304A);
at the scheduling service (112; 300), assigning the software function (304A) to a rate group (312A) that includes one or more other software functions (304A, 304B, 304C, 304D) each having the periodic execution rate (308A), wherein each software function (304A, 304B, 304C, 304D) in the rate group (312A) is executed in a group-specific processing thread (310A); and
executing the software function (304A) at the periodic execution rate (308A) using the group-specific processing thread (310A).

2. The method (200) of claim 1, further comprising receiving second registration information (302E) for a second software function (304E), the second registration information (302E) including a second periodic execution rate (308E) for the second software function (304E), assigning the second software function (304E) to a second rate group (312B) executed in a second group-specific processing thread (310B), and executing the second software function (304E) at the second periodic execution rate (308E) using the second group-specific processing thread (310B).

3. The method (200) of claim 1 or 2, wherein the rate group (312A) is one of a plurality of rate groups (312A, 312B, 312C), each associated with different periodic execution rates , and wherein software functions (304A, 304B, 304C, 304D, 304E, 304F) included in rate groups (312A, 312B, 312C) associated with higher periodic execution rates are executed with a higher priority than software functions (304A, 304B, 304C, 304D, 304E, 304F) included in rate groups (312A, 312B, 312C) associated with lower periodic execution rates.

4. The method (200) of claim 1, wherein a second software function (304E) in a second rate group (312B) is associated with a sub-banding parameter (312), the sub-banding parameter (312) indicating that execution of the second software function (304E) should periodically skip one or more cycles (402A, 402B, 402C, 402D, 402E), such that the second software function (304E) is executed at an effective execution rate that is lower than the periodic execution rate (308E) of the second rate group (312B).

5. The method (200) of claim 1, wherein a second software function (304E) in a second rate group (312B) is associated with an offsetting parameter (314), the offsetting parameter (314) indicating that execution of the second software function (304E) should be delayed by one or more cycles relative to the software function (304A).

6. The method (200) of claim 1, further comprising measuring, for each of a plurality of cycles (402A, 402B, 402C, 402D, 402E), an amount of available margin time (405) remaining after execution of each of the one or more software functions (404) of the rate group (400A, 400B, 400C), prior to a start of a next cycle of the plurality of cycles (402A, 402B, 402C, 402D, 402E).

7. The method (200) of claim 6, further comprising detecting an overrun condition (418), in which execution of the one or more software functions (404) of the rate group (400A, 400B, 400C) is not completed prior to completion of a current cycle, and reporting the overrun condition (418).

8. The method (200) of any one of the preceding claims , wherein the scheduling service (112; 300) is executed in a scheduler processing thread (114A) that is separate from the group-specific processing thread (310A).

9. The method (200) of claim 8, wherein the scheduler processing thread (114A) is a highest-priority processing thread of the computing system (100).

10. The method (200) of any one of the preceding claims, wherein the registration information (302A) for the software function (304A) is received via an application programming interface, API, (306) of the scheduling service (112; 300).

11. The method (200) of any one of the preceding claims, wherein the software function (304A) is implemented using an object-oriented programming language, such that the software function (304A) is encapsulated in an object, and wherein the periodic execution rate (308A) is defined via attributes of the object.

12. The method (200) of any one of the claims 1 to 10, wherein the software function (304A) is implemented using a non-object-based programming language, and wherein the software function (304A) is registered with the scheduling service (112; 300) by providing a pointer corresponding to the software function (304A).

13. The method (200) of claim 1, wherein the scheduling service (112) is executed in a highest-priority processing thread (114A) of the computing system (100).

14. The method (200) of claim 13, wherein the registration information (302A) further includes a sub-banding parameter for the software function (304A), the sub-banding parameter indicating that execution of the software function (304A) should periodically skip one or more cycles, said software function (304A) being executed at an effective execution rate that is lower than the periodic execution rate (308A) of the rate group (312A) due to the sub-banding parameter.

15. A computing system (100), comprising:
a logic subsystem (102); and
a storage subsystem (104) holding instructions executable by the logic subsystem (102) to perform the method (200) according to any one of claims 1 to 14.
